# EUROPÄISCHE PATENTSCHRIFT

(11) **EP 0 832 350 B1**
(45) Veröffentlichungstag und Bekanntmachung des Hinweises auf die Patenterteilung: **24.11.1999**
(21) Anmeldenummer: 96919520.5
(22) Anmeldetag: 11.06.1996
(51) Int. Cl.: F02M 21/02

(54) **VERFAHREN ZUM ZUMISCHEN VON BRENNGAS UND VORRICHTUNG ZUM ZUMISCHEN VON BRENNGAS**
FUEL GAS ADMIXING PROCESS AND DEVICE
PROCEDE ET DISPOSITIF D'ADJONCTION DE GAZ COMBUSTIBLE A UN MELANGE

(30) Priorität: 12.06.1995 CH 171895
(43) Veröffentlichungstag der Anmeldung: 01.04.1998
(73) Patentinhaber: Gachnang, Hans Rudolf, 8501 Frauenfeld (CH)
(72) Erfinder: SEGER, Hugo, CH-8266 Steckborn (CH)
(74) Vertreter: Gachnang, Hans Rudolf
(86) Internationale Anmeldenummer: CH9600223
(87) Internationale Veröffentlichungsnummer: WO9641942

(56) Entgegenhaltungen:
- FR-A- 2 315 004
- PATENT ABSTRACTS OF JAPAN vol. 10, no. 238 (M-508), 16.August 1986 & JP,A,61 070161 (MITSUBISHI HEAVY IND), 10.April 1986,
- PATENT ABSTRACTS OF JAPAN vol. 10, no. 174 (M-490), 19.Juni 1986 & JP,A,61 023857 (AISAN KOGYO), 1.Februar 1986,
- PATENT ABSTRACTS OF JAPAN vol. 10, no. 96 (M-469), 12.April 1986 & JP,A,60 233359 (MATSUSHITA DENKI SANGYO), 20.November 1985,

## Beschreibung

Gegenstand der Erfindung ist ein Verfahren zum Zumischen von Brenngas zur Verbrennungsluft in einem Verbrennungsmotor gemäss Oberbegriff des Patentanspruches 1. Gegenstand der Erfindung ist weiter eine Vorrichtung zum Zumischen von Brenngas zur Verbrennungsluft in einem Verbrennungsmotor gemäss Oberbegriff des Patentanspruches 6.

Es ist seit vielen Jahren bekannt, insbesondere stationäre Motoren von Wärmekoppelungsanlagen mit Erdgas zu betreiben. Es sind auch schon Motorfahrzeuge in Betrieb, welche mit Erdgas angetrieben werden. Der Betrieb von stationären Verbrennungsmotoren mit Erdgas ist verhältnismässig unproblematisch, weil für eine optimale Einstellung der Parameter genügend Zeit zur Verfügung steht und die optimale Einstellung - einmal erreicht - für lange Zeit konstante Werte liefert. Anders sieht es aus bei Fahrzeugmotoren mit Wechsellastbetrieb. Die meisten bekannten mit Gas betriebenen Motoren werden im Zweistoffbetrieb gefahren, d.h. es kann sowohl Erdgas als auch Benzin für den Betrieb eingesetzt werden. Solche Zweistoffmotoren genügen den heutigen und zukünftigen Anforderungen der Luftreinhalteverordnungen bei weitem nicht. Der Grund schlechter Abgaswerte liegt insbesondere in der Zusammensetzung des Erdgases. Je nach Herkunft des Erdgases weist dieses eine ganz unterschiedliche chemische Zusammensetzung auf. Die Zusammensetzung kann auch bei gleicher Herkunft innert kürzester Zeitabstände ändern. Die grossen europäischen Verteilorganisationen für Erdgas, welche ihr Produkt in die Verbundleitungen der einzelnen Staaten einspeisen, mischen den aus den Herkunftsländern ankommenden Gasen weitere Komponenten bei, welche andernorts als Nebenprodukte anfallen. Es sind dies Butane, Propane und/oder weitere.
Die Anforderungen, welche an eine Zumischung von Erdgas in die Verbrennungsluft, d.h. in die aus der Umgebung angesaugte, für die Verbrennung im Motor notwendige Luft gestellt werden, sind vielfältig und müssen während des Betriebes des Motors unabhängig von dessen Lastzustand stetig angepasst werden können. Allein ein stöchiometrisches Verhältnis exakt aufrechzuerhalten genügt folglich nicht, um eine saubere, abgasarme Verbrennung zu erreichen.
Im Gegensatz zu den rein eingesetzten Flüssiggasen, wie Butan und Propan, die heute bereits schon vielerorts für den Betrieb von Fahrzeugen, inbesondere von Hubstaplern und Kommunalfahrzeugen, im Einsatz sind, ist eine einwandfreie Vermischung von Erdgas mit der Brennluft äusserst schwierig. Probleme stellen sich unter anderem auch wegen den unterschiedlichen Dichten der im Erdgas enthaltenen Komponenten. Wenn die Vermischung Brenngas/Luft nicht einwandfrei schon bereits vor der Einleitung in den Hubraum des Verbrennungsmotors erfolgt ist, so kann dort keine Verbrennung stattfinden, welche niedrige Abgaswerte liefert. Ohne eine einwandfreie Verbrennung ist der Einsatz und insbesondere der Aufwand für die Verwendung von Erdgas als Treibstoff für Fahrzeuge nicht gerechtfertigt.
Im Gegensatz zu den Flüssiggasen und auch zu flüssigen Brennstoffen wie Benzin und Diesel sind weitaus höhere Investitionen für die Speicherung von Erdgas nötig. Dieses kann nämlich nur unter hohem Druck oder bei sehr tiefen Temperaturen in flüssigen Zustand überführt und aufbewahrt werden. Dies bedeutet, dass nicht nur bei den Tankstellen, sondern insbesondere auch im Fahrzeug das Erdgas in einem Druckspeicher gelagert werden muss. Ebenfalls müssen in der gesamten Transportkette des Erdgases stets Druckleitungen und/oder Verdichter für die Verflüssigung oder Kühltanks für eine Kühlung auf minus 176° C vorhanden sein.
Aus der JP-A-61070161 ist eine Gasluftmischvorrichtung für einen Verbrennungsmotor bekannt, dem das Brenngas in entgegengesetzter Richtung zur Flussrichtung der Verbrennungsluft zugeführt und durch ein konisches Ventil in der Brennluft verteilt wird.
Aus der JP-A-60233359 ist weiter eine Brenngaszufuhr mit einem Ventil, welches das Brenngas in entgegengesetzter Richtung zur Flussrichtung der Brennluftflussrichtung zuführt, bekannt. Mit beiden bekannten Vorrichtungen lasst sich keine an die Anzahl der mit Brenngas zu beschickenden Zylinder angepasste Brennstoffluftmischung erzeugen.

Die Aufgabe der vorliegenden Erfindung besteht nun darin, Verfahren und eine Vorrichtung zu schaffen, welche das Zumischen von Brenngas zur Verbrennungsluft in einem Otto- oder Dieselfahrzeug-Verbrennungsmotor in stöchiometrischem Verhältnis erlauben und zudem eine einwandfreie Durchmischung des Gases mit der Verbrennungsluft vor dem Eintritt des Brennstoff/Luftgemisches in den Hubraum des Verbrennungsmotors ermöglichen.

Gelöst wird diese Aufgabe durch Verfahren und eine Vorrichtung gemäss den Merkmalen der Patentansprüche 1 und 6.

Das Einführen des Brenngases an mindestens zwei in Strömungsrichtung beabstandeten und hintereinanderliegenden Stellen des Zuleitungsrohres verbessert die homogene Vermischung zwischen Brenngas und Verbrennungsluft innerhalb der Gassäule des im Zuleitungsrohr sich zum Motor bewegenden Brennstoffgemisches. Der Abstand zwischen den Einleitungs- oder Einspritzstellen des Brennstoffes ist entsprechend der Anzahl der zu beschickenden Zylinder und/oder deren Hubvolumen ausgelegt. Die Einspritzung des Brennstoffes erfolgt an den Einspritzstellen alternierend. In einer besonders vorteilhaften Ausführung ist das Zuleitungsrohr bogenförmig ausgebildet, und die mindestens eine Einspritzdüse liegt parallel zur Strömungsrichtung der Luft an der Einspritzstelle. Die Einspritzdüse leitet das Gas in Gestalt eines Kegelmantels oder eines Kegelstumpfmantels entgegen der Brennluftströmung in diese ein. Das eingeleitete Brenngas verteilt sich dadurch über den gesamten Strömungsquerschnitt der Brennluft und durchmischt sich und/oder verbindet sich mit dem Luftsauerstoff infolge gleichmässiger Verteilung des Brenngases beim Einspritzen homogen.

Anhand eines illustrierten Ausführungsbeispieles wird die Erfindung näher erläutert. Es zeigen
- Figur 1: einen Querschnitt durch ein gekrümmtes Zuleitungsrohr mit Einspritzdüsen auf dem Zylinderkopf eines Verbrennungsmotors,
- Figur 2: einen Längsschnitt durch das Zuleitungsrohr in Figur 1,
- Figur 3: eine perspektivische Darstellung des kegelmantelförmigen Brenngaseintrittes.

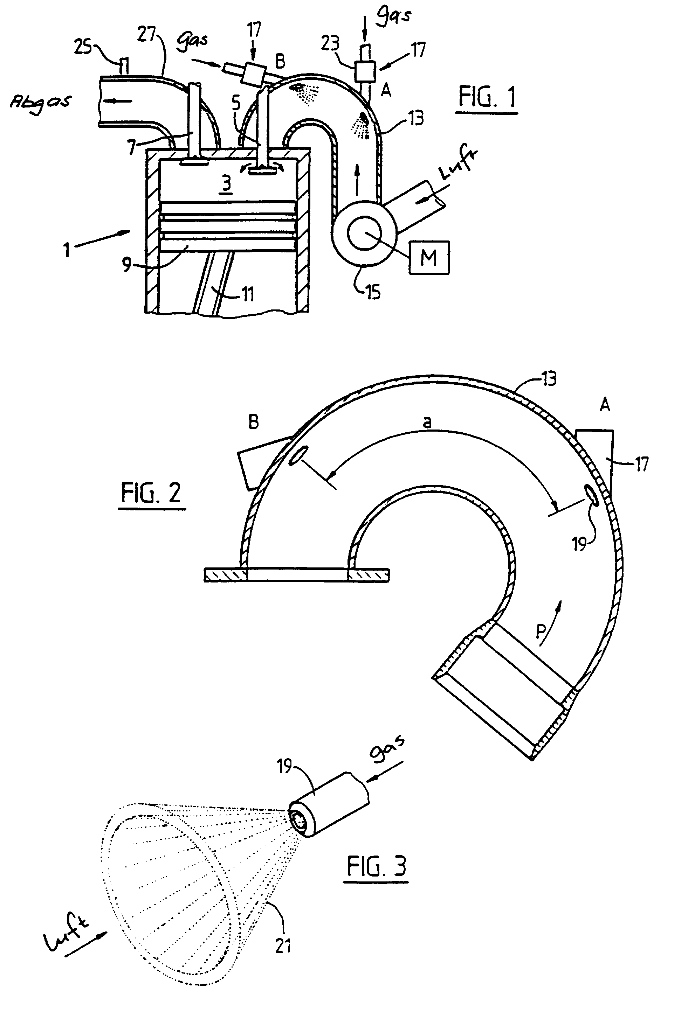

Mit Bezugszeichen 1 ist ein schematisch dargestellter oberer Teil eines Zylinderkopfes eines Verbrennungsmotors dargestellt. Es kann ein Diesel- oder ein Ottomotor sein. Oberhalb des Hubraumes 3 sind je ein Einlassventil 5 und ein Auslassventil 7 ersichtlich, wobei das Einlassventil 5 geöffnet ist. Im weiteren sind der Kolben 9 und die Kolbenstange 11 dargestellt. Das Einlassventil 5 liegt am Ende eines Zuleitungsrohres 13 für ein Gemisch aus Brenngas und Brennluft, welche aus der Umgebung angesaugt wird. Vorzugsweise wird die Verbrennungsluft durch einen Turbolader 15 verdichtet, um mit einem erhöhten Ladedruck arbeiten zu können. Schematisch ist der Antrieb für den Turbolader durch einen Motor M dargestellt.
Selbstverständlich kann der Turbolader auch durch eine Abgasturbine betrieben werden. Eine nähere Erläuterung des Turboladers erfolgt hier nicht, da er aus den Stand der Technik hinlänglich bekannt ist.
Im Zuleitungsrohr 13 sind zwei Einspritzdüsen 17 zum Einspritzen von Erdgas befestigt. Die Einspritzrichtung, d.h. die Achsen der Einspritzdüsen münden tangential zur Strömung der Verbrennungsluft, welche vom Turbolader 15 durch das Zuleitungsrohr 13 zum Hubraum 3 geführt wird. Die Einspritzrichtung des Gases in die Verbrennungsluft verläuft entgegengesetzt zur Strömrichtung P der verdichteten Luft. In einer besonders vorteilhaften Ausgführungsform der Erfindung wird durch entsprechende Ausbildung des Düsenkopfes 19 (Figur 3) ein kegelstumpfmantel- oder kegelmantelförmiger Gasstrahl 21 erzeugt. Dieser Gasstrahl 21 kann sich, bei entsprechendem Druck des Brenngases, über den gesamten Rohrquerschnitt des Zuleitungsrohres 13 ausbreiten. Im dargestellten Beispiel sind an der Stelle A und an der Stelle B gleichartig ausgebildete Einspritzdüsen 17 angeordnet. Sie liegen in einem Abstand a, dessen Betrag vom Hubvolumen des Zylinders 1 abhängt und daher bei jedem Motor einen anderen Wert annehmen kann.
An jeder Einspritzdüse 17 ist ein Magnetventil 23 eingesetzt, mit welchem das Brenngas während einer vorbestimmten Zeit in das Zuleitungsrohr 13 einspritzbar ist. Der Zeitpunkt der Einspritzung bezüglich der momentanen Lage des Kolbens 9 und die Einspritzdauer sind wiederum abhängig von der Grösse des Hubraumes 3, des Querschnittes der Einspritzdüse 19 und auch des Querschnittes des Zuleitungsrohres 13 sowie weiterer Parameter, die hier nicht näher benannt werden. Die Steuerung des Einspritzzeitpunktes und der Einspritzdauer wird durch eine Motorsteuerung (CPU) übernommen, welche auch die Werte einer Lambdasonde 25 in der Abgasleitung 27 auswertet.

Unter der Voraussetzung, dass dem Motor ein Brenngas bekannter und zugleich konstanter Zusammensetzung zugeleitet wird, erfolgt die Zumischung von Brenngas durch die Einspritzdüsen 17 in einem stöchiometrischen Verhältnis. Das Aufbereiten eines stöchiometrischen Gemisches ist aus den herkömmlichen mit Flüssigtreibstoffen betriebenen Verbrennungsmotoren bekannt, und entsprechende Steuerungen sind im Handel erhältlich. Es sind folglich lediglich Massnahmen zu treffen, welche das Brennstoffgemisch und dessen Menge an den jeweiligen Lastzustand des Motors anpassen. Die dazu nötigen Massnahmen sind aus dem Stand der Technik ebenfalls bekannt.
Anders verhält es sich bei Verwendung von Erdgas, dessen Zusammensetzung mit jeder Tankfüllung ändert.
Entsprechende Sonden zur Bestimmung der Zusammensetzung des momentan gebunkerten Gases sind nötig, um die Einspritzparameter über die MotoreneleKtronik anzupassen. Die Anpassung hat selbstverständlich mit jeder Nachfüllung, auch wenn diese nur geringfügig ist, zu erfolgen.

Im folgenden wird die Funktionsweise der Gemischaufbereitung, d.h. das Zumischen des Brenngases zur Brennluft erläutert.
Der Turbolader 15 liefert während einer Zeit t eine konstant bleibende Menge verdichteter Luft, welche mit einer konstanten Geschwindigkeit in das Zuleitungsrohr 13 eingeleitet und durch dieses hindurchgeführt wird. In die sich zum Zylinder verschiebende Luftsäule im Zuleitungsrohr 13 wird nun abwechslungsweise durch die beiden Einspritzdüsen 17 während einer bestimmten Zeit tl Brenngas eingeleitet. Die im Zuleitungsrohr 13 fliessende verdichtete Luft fliesst nun in den unten offenen kegelmantel- oder kegelstumpfmantelförmigen Gasstrahl ein und das ausströmende Gas kann sich gleichmässig über den Querschnitt des Zuleitungsrohres 13 in der Luft verteilen und mit dieser chemische Verbindungen eingehen. Infolge der beschränkten Einspritzdauer von Brenngas in die Brennluft wird nur ein bestimmter, in seiner Länge begrenzter Abschnitt der Luftsäule mit Brenngas angereichert. Durch genaue Abstimmung der Einspritzdauer von Brenngas und der Fortbewegungsgeschwindigkeit der Brennluftsäule kann durch das abwechslungsweise Betätigen der Einspritzdüsen 19 eine homogene Verteilung von Brenngas innerhalb der gesamten sich in der Zuleitung 13 befindlichen Luftsäule erreicht werden. Es lassen sich dabei auch durch die Steuerung die Schliesszeiten des Einlassventiles 5 und der Einspritzdruck mitberücksichtigen.

In Figur 1 sind zwei Einspritzdüsen 17 dargestellt. Es können ohne weiteres und bei Bedarf jeweils auch zwei oder mehr Einspritzdüsen, verteilt über den Umfang des Zuleitungsrohres 13 vorgesehen werden, um insbesondere bei grösseren Motoren die entsprechend grössere Gasmenge einwandfrei in die ebenfalls grössere Brennluftmenge einmischen zu können.
Das erfindungsgemässe Verfahren zum Zumischen von Brenngas kann auch bei Gasturbinen oder Gasbrennern eingesetzt werden.

## Patentansprüche

1. Verfahren zum Zumischen von Brenngas zur Verbrennungsluft in einem Verbrennungsmotor, bei welchem Umgebungsluft durch ein Zuleitungsrohr (13) in den Zylinderkopf (1) des Motors eingeführt und vor der Einleitung in den Kolbenraum (3) mit Brenngas angereichert wird, wobei das Brenngas entgegengesetzt zur Strömrichtung (P) der Brennluft in das Zuleitungsrohr (13) eingeführt wird, dadurch gekennzeichnet, dass das Brenngas mindestens an zwei in Strömungsrichtung (P) hintereinander und in einem Abstand (a) liegenden Stellen (A,B) des Zuleitungsrohres (13) eingeleitet wird.

2. Verfahren nach Anspruch 1, dadurch gekennzeichnet, dass das Brenngas an den Stellen (A und B) alternierend eingeleitet wird.

3. Verfahren nach einem der Ansprüche 1 oder 2, dadurch gekennzeichnet, dass das Zuleitungsrohr (13) gekrümmt ausgebildet ist und das Brenngas im wesentlichen parallel zur Strömrichtung (P) der Brennluft im Zuleitungsrohr (13) in diese eingeleitet wird.

4. Verfahren nach einem der Ansprüche 1 bis 3, dadurch gekennzeichnet, dass das Brenngas durch eine Einspritzdüse (17) kegelstumpfmantel-oder kegelmantelförmig in den Brennluftstrom eingeleitet wird.

5. Verfahren nach einem der Ansprüche 1 bis 4, dadurch gekennzeichnet, dass die chemische Zusammensetzung des Gases in der Zuleitung zum Motor oder im Tank kontinuierlich oder jeweils nach dem Tanken analysiert und die Analysewerte an die Motorenelektronik weitergeleitet werden.

6. Vorrichtung zum Zumischen von Brenngas zur Verbrennungsluft in einem Verbrennungsmotor, mit einem Zuleitungsrohr für aus der Umgebung angesaugte Brennluft und mit mindestens einer Einspritzdüse (17) für Brenngas, wobei die Einspritzdüse (17) der Strömrichtung (P) der Brennluft entgegengesetzt im Zuleitungsrohr (13) eingesetzt ist, dadurch gekennzeichnet, dass zwei oder mehrere Einspritzdüsen (17) in einem Abstand (a) hintereinander im Zuleitungsrohr (13) eingesetzt sind.

7. Vorrichtung nach Anspruch 6, dadurch gekennzeichnet, dass das Zuleitungsrohr (13) bogenförmig ausgebildet ist und die mindestens eine Einspritzdüse (17) an der Mantelaussenseite angeordnet ist.

## Claims

1. A process to add fuel gas to combustion air in an internal combustion engine whereby environmental air is fed through a feed pipe (13) into the cylinder head (1) of the engine and enriched with fuel gas before being introduced into the plunger chamber, and the fuel gas is introduced into the feed pipe (13) opposite the direction of flow (P) of the combustion air, characterized in that the fuel gas is introduced at a minimum of two sites (A,B) in the feed pipe (13) lying sequentially in the direction of flow at distance (a).

2. The process according to claim 1, characterized in that the fuel gas is introduced alternatingly at the sites (A and B).

3. The process according to one of claims 1 or 2, characterized in that the feed pipe (13) is curved, and the fuel gas is introduced into the feed pipe essentially parallel to the direction of flow (P) of the combustion air in the feed pipe (13).

4. The process according to one of claims 1-3, characterized in that the fuel gas is introduced in the shape of a truncated cone into the fuel air stream by an injection nozzle (17).

5. The process according to one of claims 1-4, characterized in that the chemical composition of the gas in the feed to the motor or in the tank is analyzed continuously or after a fill-up, and the analysis values are fed to the engine electronics system.

6. The device to mix fuel gas with combustion air in an internal combustion engine with a feed pipe for the combustion air drawn from the environment, and with at least one injection nozzle (17) for fuel gas, whereby the injection nozzle (17) in the feed pipe (13) points opposite the direction of flow (P) of the combustion air, characterized in that two or more injection nozzles (17) are used that are separated by distance (a) sequentially in the feed pipe (13).

7. The device according to claim 6, characterized in that the feed pipe (13) is curved, and at least one injection nozzle (17) is on the outside surface.

## Revendications

1. Procédé d'adjonction de gaz combustible à l'air de combustion dans un moteur thermique, selon lequel de l'air ambiant est introduit dans la culasse (1) du moteur par un tuyau d'alimentation (13) et enrichi en gaz combustible avant l'introduction dans le compartiment à piston (3), le gaz combustible étant introduit dans le tuyau d'alimentation (13) en sens inverse de celui du débit (P) de l'air à combustion, caractérisé en ce que le gaz combustible est introduit au moins en deux points (A, B) du tuyau d'alimentation (13), positionnés l'un derrière l'autre dans le sens du débit (P) et à une distance (a).

2. Procédé selon la revendication 1, caractérisé en ce que la gaz combustible est introduit alternativement aux deux points (A et B).

3. Procédé selon une des revendications 1 ou 2, caractérisé en ce que le tuyau d'alimentation (13) est courbé et que le gaz combustible est introduit dans l'air à combustion parallèlement au sens du débit (P) de celui-ci dans le tuyau d'alimentation (13).

4. Procédé selon une des revendications 1 à 3, caractérisé en ce que le gaz combustible est introduit dans le débit d'air à combustion par un injecteur (17) sous forme de gaine tronconique ou conique.

5. Procédé selon une des revendications 1 à 4, caractérisé en ce que la composition chimique du gaz est analysée en continu dans la conduite menant au moteur ou dans le réservoir ou chaque fois après le ravitaillement en carburant et que les valeurs d'analyse sont transmises au système électronique du moteur.

6. Dispositif d'adjonction de gaz combustible au mélange d'air de combustion dans un moteur à combustion, avec un tuyau d'alimentation pour de l'air à combustion aspiré dans l'atmosphère et avec au moins un injecteur (17) pour du gaz combustible, l'injecteur (17) étant utilisé en sens inverse du sens du débit (P) de l'air à combustion dans le tuyau d'alimentation (13), caractérisé en ce que deux ou plusieurs injecteurs (17) sont utilisés en série à une distance (a) dans le tuyau d'alimentation (13).

7. Dispositif selon la revendication 6, caractérisé en ce que le tuyau d'alimentation (13) est en forme d'arc et qu'au moins une buse d'injection (17) est disposée sur le côté extérieur de la gaine.
